Europäisches Patentamt

(19) European Patent Office

Office européen des brevets

(11) Publication number: **0 256 323 B1**

# EUROPEAN PATENT SPECIFICATION

(45) Date of publication of patent specification: **25.11.92**    (51) Int. Cl.⁵: **C08G  69/18**

(21) Application number: **87110392.5**

(22) Date of filing: **17.07.87**

(54) **Improved process for the anionic polymerization of caprolactam, and for the copolymerization thereoff with other lactams.**

(30) Priority: **14.08.86 IT 2148886**

(43) Date of publication of application:
**24.02.88 Bulletin  88/08**

(45) Publication of the grant of the patent:
**25.11.92 Bulletin  92/48**

(84) Designated Contracting States:
**BE DE ES FR GB NL SE**

(56) References cited:
DE-A- 1 520 600          FR-A- 1 213 993
FR-A- 2 576 602          US-A- 3 017 391
US-A- 3 061 392          US-A- 3 910 861

G.C.Alfonso et al,"Activited aninic polymer-
ization of epsilon-caprolactam for RIM pro-
cess", ACS Symposium Series, No.270.

G.C.Alfonso et al, "Nitrile rubber-modified
poly( E-caprolactam) by activated anionic
polymerization" Proceedingsof the Interna-
tional Seminar 9-13 June 1986, naples, Italy),
published VNU Science Press Bv, Utrecht
1987.

(73) Proprietor: **Canalini, Giovanni**
**Via Agadir, 10/A**
**I-20097 San Donato Milanese (MI)(IT)**

(72) Inventor: **Canalini, Giovanni**
**Via Agadir, 10/A**
**I-20097 San Donato Milanese (MI)(IT)**

(74) Representative: **Trupiano, Roberto**
**BREVETTI EUROPA S.r.l. Piazza Bernini, 6**
**I-20133 Milano (MI)(IT)**

## Description

The present invention relates to a process, also continuous, for preparing granular reinforced or filled poly($\epsilon$-caprolactam) composites by anionic polymerization by means of dropwise addition to a dispersing media.

It is common knowledge that polycaprolactam is an aliphatic polyamide, better known as NYLON 6, and customary used in the textile and industrial fields, thanks to its optimum dyeability in the piece, and to its optimum balance of physical-mechanical properties. This polymer is generally supplied as granules, in different types, relatively to its molecular weight or anyway to its viscosity. The polycondensation process, undoubtedly the only process used for the production of polyamide 6 for textile uses, for filming applications and for the injection moulding of finished articles for the technical sectors, shows a high energetic cost, both during the polymerization step (temperature higher than $200\,^\circ$C), and due to the post-polymerization costs, when the polymer is maintained at the temperature of incipient melting for securing the upgrading of the polymer, for the purpose of increasing its viscosity.

The industrial yield is generally lower than 90% of polymerized polycaprolactam, so that a whole set of washes is required for removing from the polymer the monomer and the low polymers.

A further energetic cost is associated with the drying step.

On considering the melting point of polyamide 6 (above $215\,^\circ$C) and the above cited very good balance of physical-mechanical characteristics, it is used as a polymeric matrix, together with fillers and/or reinforcing additives, for the purpose of improving its use in the technical sectors wherein the finished articles operate at high working temperatures.

As polyamide 6 is an organic compound, it requires, like all organic polymers, a suitable stabilization for the purpose of improving its operating life; furthermore, due to aesthetical reasons, to polyamide 6 organic and/or inorganic pigments are often added.

During the polycondensation polymerization, adding additives and/or pigments without impairing the kinetics of polymerization is not always possible.

Producing reinforced or filled polyamide 6 composites directly during the polycondensation polymerization results as much as impossible.

Normally, when polyamide 6 must be dyed, and/or stabilized, and/or modified, and/or filled, and/or reinforced, melt-blending operations are necessary, carried out on suitable extruders, during which pigments, additives, modifiers, fillers and reinforcing additives are dispersed through the polymeric matrix, by melting it.

Such a process, normally called "compounding", requires a considerable expenditure for facilities, as well as a not negligible energetic cost (0.2 - 0.8 kWh/kg) for heating polyamide 6 to a temperature higher than its melting point (comprised within the range of from $230\,^\circ$C to $300\,^\circ$C). The high temperature, necessary for obtaining optimum values of the melt viscosity for a good dispersion of the materials different from the polymer (additives, pigments, modifying polymers, fillers and reinforcing additives), favours undesired phenomena of degradation, with a consequent worsening of the physical-mechanical properties.

DE-15 20 600 (THE POLYMER CORP.) relates to a process for preparing a polymer of a lactam powder, with the polymerization being carried out in a support liquid. Such a support liquid has the following characteristics:

- it has a density lower than the density of the polymer, but higher than the density of the monomer -
- it is a solvent of, or is miscible with, the monomer, whilst is a non-solvent for the obtained polymer and is preferably constituted by aliphatic and/or aromatic hydrocarbons or by dibutyl phthalate.

US 3,910,861 (WOLVERS et al.) relates to a process for the preparation of polyamides in powdery form by solution polymerization, wherein the polymerization is carried out in an inert solvent, in which the lactam monomer is soluble and the polyamide is insoluble.

FR-A-1213993 discloses a process for the production of polyamides in pearly form, consisting in suspending a monomeric lactam in an inert suspension agent , adding to the lactam suspension a catalyst, an accelerator, a dispension agent, agitating the suspension and heating said suspension to the polymerization temperature.

Talcum or polyamide powder added to the suspension, have the function to prevent the sticking together of the polyamide into large lumps or to prevent it adhering to the wall of the vessel. The reaction time is of the order of 2-3 hours.

FR-A-2576602 relates to a process for the production of polyamides in powder form in 2-3 hours by means of a solution polymerization consisting in injecting an activator into a reaction means comprising the monomer, a solvent, a catalyst, an activator and, if it is the case, a finely divided inert material having the function of generating nucleus, characterized in that to said reaction means N, N'-alckylene-bis-amide is added.

US 3017391 (E.H.MOTTUS) relates to a bulk polymerization process, according to which a mixture comprising the molten monomer, a catalyst, a promoter and possibly plasticizers and pigments is raised to a temperature of 160°C untill the entire reaction mass has become a solid block of polymer. The polymer block is then broken up, ground into small chips and leached. The paper "Activated anionic polymerization of epsiloncaprolactam for RIM process" by G.C. Alfonso et al , ACS Symposium Series, No.270 relates to the activated anionic polymerization in bulk of epsilon-caprolactam. In this paper, the role of initiator and activator concentrations on the process of epsilon-caprolactam anionic polymerization has been explored, with the aim of selecting the most suitable experimental conditions for the RIM process. The effects of the active species have been evaluated and it has been found that polymer molecular masses and their distributions are related to both active species in a complex manner. Side reactions and structural irregularities in the polymer chains have been correlated to the absolute and relative concentrations of activator and initiator in order to minimize their extent. The effect of active species on the overall polymerization time as well as on the initial and maximum rates of polymerization has been evaluated.

The paper "Nitrile rubber-modified poly($\epsilon$-caprolactam) by activated anionic polymerization" by Alfonso et Al. (Procedings of the International Seminar 9-13 June, Naples, Italy, published VNU Science Press BV, Utrech 1987) relates to the activated anionic polymerization of $\epsilon$-caprolactam in presence of butadiene-acrylonitrile elastomers carried out in bulk, in adiabatic conditions. The classical, relatively slow activators lead to polymerization rates reduced in comparison to polymer formation from the neat monomer; moreover, the polymerization kinetics is dramatically affected by the degree of mixing of the reactants containing the catalytic species, the monomer and the rubber, as well as the contact time between the basic initiator and the rubber. Very fast activators minimize the retardation effects of the rubber.

The Applicant has found now, and it is the object of the present invention, that polyamide 6, copolymers thereof, and composites thereof, can be obtained by polymerizing $\epsilon$-caprolactam (either alone or with its comonomers) directly inside suitable dispersing media, by means of the anionic polymerization technique, at relatively low temperature, after the preliminary incorporation into the molten caprolactam, of initiators of anionic polymerization (precursors and mono- and polyfunctional activators of polymerization), of lactams with a different number of carbon atoms relatively to caprolactam, of additives, of pigments, of - also polymeric - modifiers, of organic and inorganic fillers with different morphological characteristics.

Said anionic polymerization of polycaprolactam in dispersion takes place at temperatures comprised within the range of from 100°C to 200°C, wherein the morphology of the particles of the obtained polymer depends also on said polymerization temperature.

Said polymerization in dispersion of caprolactam takes place in the presence of a catalytic system constituted by initiators of anionic polymerization comprising:

- lactamates of various metals;
- or their precursors, such as alkali metals, or alkali-earth metals, their hydrides, boronhydrides, oxides, hydroxides, and organo-derivatives;
- or Grignard reactants;
  and of activators of anionic polymerization comprising:
- N-carbamoyllactams and related precursors.

The activators can be mono- or poly-functional. The metal caprolactamate, to which an activator has been added in a suitable stoichiometric ratio, is percolated with stirring, into a suitable dispersing medium. By "dispersing medium", and according to the present invention, any organic or inorganic compounds are meant, on condition that they are liquid, and have a very low viscosity, at temperatures comprised within the range of from 100°C to 200°C, totally immiscible with the molten caprolactam, and non-solvent for polycaprolactam, copolymers thereof, and composites thereof.

Dispersing agents are selected from the group comprising:

- linear and branched polyethylenic waxes;
- amorphous (atactic) polypropylene;

The dispersing agent can contain (and that relatively to the needs deriving from the kinetics of the anionic polymerization, as well as from the morphological characteristics of the polymer particles) agents capable of stabilizing the dispersion, by preventing or reducing the coagulation of the particles of the polymer, optimizing the distribution of the dimensions and the surface state of the "drops" of caprolactam, activated and initiated for the anionic polymerization, as well as of the particles of polyamide 6.

Stabilizing agents for the dispersing medium (polymerization medium) can be of the type, but not limitedly to them:

- non ionic surfactants;
- surfactants.

In the activated caprolactam salt, compounds can be dissolved, or dispersed, or added during the percolation step which are reactive, or are at all inert, such as, for example, but not limitedly:

- moisture sequestering agent;
- organic or inorganic compounds:
- pigments;
- other polymers, such as nitrile elastomers or polyurethane elastomers, or polyolefinic elastomers;

- comonomers (from pyrrolidone, with 4 carbon atoms, to lauryllactam, with 12 carbon atoms);
- fillers (talc, carbonates, kaolin, mica, wollastonite, titanates, glass beads, and carbon blacks;
- reinforcing agents (fiberglass, carbon fibres, organic fibres, wiskers, and asbestos.).

The process for preparing granular reinforced or filled poly ( $\epsilon$ -caprolactam) composites by anionic polymerization according to the invention comprises the steps of:

(1) melting $\epsilon$-caprolactam monomer or its mixtures with other lactams of a different number of carbon atoms at a temperature of 70 to 150 C°.

(2) dividing said melt into at least two parts A and B,

(3) adding an initiator of anionic polymerization to said melt part A under stirring,

(4) adding an activator of anionic polymerization to said melt part B under stirring,

(5) adding inert fillers or reinforcing agents and optionally a moisture sequestering agent, pigments or elastomers to said parts A or B or a part to said part A and a part to said part B,

(6) mixing said parts A and B and percolating the resulting mixture into a dispersing medium totally immiscible with the molten monomers and non solvent for the resulting polymer kept under stirring at a temperature of 100 to 200 C°,

(7) filtering and washing the obtained granular composite with a suitable solvent and subsequently drying said granular composite.

The process according to the invention, is preferably carried out in continuous.

The process of the invention is endowed with the advantages of resulting:

- very versatile (polyamide 6, its copolymers, its polymeric alloys, its composites, are obtained in one step only, with the compounding being eliminated);
- very fast (polycaprolactam, or its derivatives, are obtained within very short times, anyway as a function of the efficiency of the activators);
- very efficacious (yields higher than 95% of $\epsilon$-caprolactam conversion into polycaprolactam);
- very cheap from the energetic point of view, in as much as during the only step of anionic polymerization in dispersion:
  a) a high-yield polymer, with no need for upgrading, in that the addition of adequate crosslinking agents allows the most different viscosities to be obtained;

  b) high-yield copolymers;
  c) already mass-pigmented polymers;
  d) polymeric alloys;
  e) polymers with preset stability;
  f) composites
  are obtained.

The above can all be obtained by eliminating the traditional steps of melt-homogenization on extruder. According to the process object of the invention, polymers constituted by particles having a very peculiar shape are obtained, which cannot be obtained according to usual technics of grinding and/or atomizing.

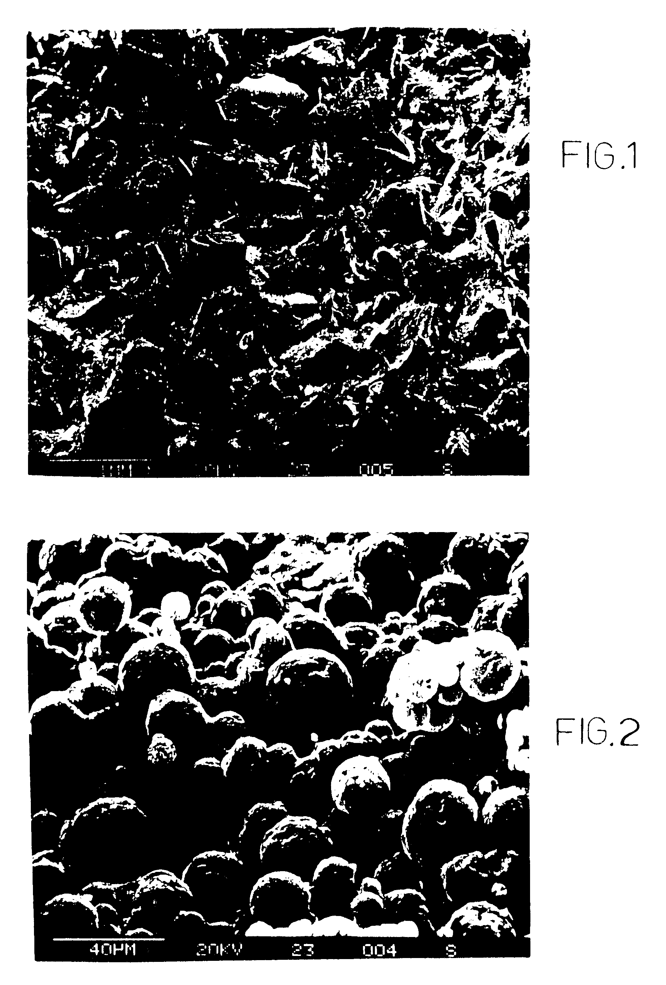

In fact, the usual crushing at low temperature produces splinters of polymer having a shape highly irregular, with sharp edges and a large dimensional distribution, as evidenced in figure 1 (relating to an anionic polyammide 6). On the contrary, the process according to the invention, allows the obtaining of polymers having a rounded shape, substantially spheric.

As an example, Figure 2 shows the spheric shape of a polyamide 6 (obtained by anionic polymerization according to the invention).

The temperatures involved by the process of anionic polymerization of $\epsilon$-caprolactam in dispersion, according to the present invention, are considerably lower than used in the process of polymerization of caprolactam by polycondensation, because said first temperatures have values comprised within the range of from 120°C to 180°C, preferably from 145°C to 155°C, instead of being higher than 200°C.

As regards the composites, it undoubtedly appears that the more intimate blending of the components which can be obtained in the molten caprolactam, before the anionic polymerization, makes it possible to reach physical-mechanical performances better than the corresponding performances of the composites obtained by means of the melt-blending, by extrusion, of polyamides 6 obtained by the polycondensation process.

The process of the present invention is accomplished by having care of carrying out all of the operations of production of metal caprolactamate, of preparation of possible comonomers, of preparation of the activator, of preparation of the various modifier ingredients, of preparation of the dispersing medium and of washing of the obtained polymer, under an inert gas atmosphere, for the purpose of preventing competitive noxious rections and detrimental poisonings of the reaction of anionic polymerization.

Particular attention has to be devoted to the elimination of water which causes inhibitions of the reaction kinetics even in trace amounts (10 ppm).

## Claims

1. Process for preparing granular reinforced or filled poly (ε-caprolactam) composites by anionic polymerization comprising the steps of

(1) melting ε-caprolactam monomer or its mixtures with other lactams with a different number of carbon atoms at a temperature of 70 to 150 °C.

(2) dividing said melt into at least two parts A and B,

(3) adding an initiator of anionic polymerization to said melt part A under stirring,

(4) adding an activator of anionic polymerization to said melt part B under stirring,

(5) adding inert fillers or reinforcing agents and optionally a moisture sequestering agent, pigments or elastomers to said parts A or B or a part to said part A and a part to said part B,

(6) mixing said parts A and B and percolating the resulting mixture into a dispersing medium totally immiscible with the molten monomers and non solvent for the resulting polymer kept under stirring at a temperature of 100 to 200 °C,

(7) filtering and washing the obtained granular composite with a suitable solvent and subsequently drying said granular composite.

2. Process according to claim 1 characterized in that said dispersing medium is selected from the group consisting of linear and/or branched polyethylene waxes and amorphous polypropylene.

3. Process according to claim 1, characterized in that said lactams are pyrrolidone and lauryllactam and that said elastomers are polyolefinic, polyurethane or nitrile elastomers.

4. Process according to claim 1, characterized in that it is carried out in continuous.

**Patentansprüche**

1. Verfahren zum Herstellen von granulierten, verstärkten oder gefüllten Poly-(ε-caprolactam)-Composites durch anionische Polymerisation mit folgenden Stufen:

(1) Schmelzen von ε-Caprolactammonomer oder seiner Gemische mit anderen Lactamen mit einer anderen Anzahl an Kohlenstoffatomen bei einer Temperatur von 70 bis 150°C;

(2) Aufteilen dieser Schmelze in mindestens zwei Teile A und B;

(3) Zugabe eines Initiators für die anionische Polymerisation zum Teil A der Schmelze unter Rühren;

(4) Zugabe eines Aktivators für die anionische Polymerisation zu dem Teil B der Schmelze unter Rühren;

(5) Zugabe von inerten Füllstoffen oder Verstärkungsmitteln und gegebenenfalls eines Sequestrierungsmittels für Feuchtigkeit, Pigmenten oder Elastomeren zu den genannten Teilen A oder B oder zu einem Teil des genannten Teils A und einem Teil des genannten Teils B;

(6) Mischen der Teile A und B und Einsikkernlassen des erhaltenen Gemisches in ein Dispersionsmedium, das mit den geschmolzenen Monomeren vollständig unmischbar ist und für das erhaltene Polymer, das unter Rühren bei einer Temperatur von 100 bis 200°C gehalten wird, kein Lösungsmittel darstellt,

(7) Filtrieren und Waschen des erhaltenen granulierten Composites mit einem geeigneten Lösungsmittel und nachfolgendes Trocknen des granulierten Composites.

2. Verfahren nach Anspruch 1, dadurch gekennzeichnet, daß das Dispersionsmedium aus der Gruppe, bestehend aus linearen und/oder verzweigten Polyethylenwachsen und amorphem Polypropylen, ausgewählt wird.

3. Verfahren nach Anspruch 1, dadurch gkennzeichnet, daß die genannten Lactame Pyrolidon und Lauryllactam sowie die genannten Elastomere Polyolefin-, Polyurethan- oder Nitrilelastomere sind.

4. Verfahren nach Anspruch 1, dadurch gekennzeichnet, daß es kontinuierlich durchgeführt wird.

**Revendications**

1. Procédé pour la préparation de composés poly (ε-caprolactames) granulés renforcés ou chargés, par polymérisation anionique comprenant les stades suivants:

(1) fusion du monomère ε-caprolactame ou de ses mélanges avec d'autres lactames ayant un nombre d'atomes de carbone différent, à une température de 70° à 150°C

(2) division de ladite fusion en deux parties A et B au moins

(3) addition d'une amorce de polymérisation anionique à la partie A de ladite fusion sous agitation

(4) addition d'un activateur de polymérisation anionique à la partie B de ladite fusion sous agitation

(5) addition de charges inertes ou d'agents de renforcement et facultativement d'un agent susceptible d'éliminer l'humidité, de pigments ou d'élastomères aux dites parties A ou B ou bien une partie à ladite partie A et une partie à ladite partie B

(6) mélange desdites parties A et B et filtration du mélange resultant dans un moyen de dispersion totalement non miscible avec les monomères fondus et non solvant du polymère resultant maintenu sous agitation à une température de 100° à 200°C.

(7) filtration et lavage du composé granulé obtenu avec un solvant approprié et ensuite séchage dudit composé granulé.

2. Procédé selon la révendication 1 caracterisé en ce que le moyen de dispersion est choisi dans le groupe des cires de polyethylène lineaire on réticulaire.

3. Procédé selon la révendication 1 caracterisé en ce que lesdits lactames sont la pyrrolidone et le lauryllactame and que lesdits elastomères sont des elastomères polyolefines, polyurethanes ou nitriles.

4. Procédé selon la révendication 1 caracterisé en ce qu'il est mis en oeuvre en continu.

FIG.1

FIG.2